# EUROPÄISCHE PATENTSCHRIFT

(11) **EP 2 725 160 B1**
(45) Veröffentlichungstag und Bekanntmachung des Hinweises auf die Patenterteilung: **27.04.2016**
(21) Anmeldenummer: 13188717.6
(22) Anmeldetag: 15.10.2013
(51) Int. Cl.: E04B 5/48, E04C 2/52, E04C 5/20, F24D 3/14

(54) **Betonkerntemperierungselement sowie Betonkerntemperierungssystem, das ein derartiges Betonkerntemperierungselement umfasst**
Concrete core tempering element and concrete core tempering system, comprising such a concrete core tempering element
Elément de thermorégulation de noyaux de béton et système de thermorégulation de noyaux de béton comprenant un tel élément de thermorégulation de noyaux de béton

(30) Priorität: 29.10.2012 DE 102012110317
(43) Veröffentlichungstag der Anmeldung: 30.04.2014
(73) Patentinhaber: REHAU AG + Co, 95111 Rehau (DE)
(72) Erfinder: Burkhardt, Oliver, 90763 Fürth (DE); Vohler, Tobias, 92318 Neumarkt (DE)

(56) Entgegenhaltungen:
- WO-A1-93/19263
- DE-A1- 19 848 561
- DE-U1-202004 015 984
- DE-U1-202007 000 590
- GB-A- 2 139 664
- US-A- 1 153 279

## Beschreibung

Die Erfindung betrifft ein Betonkerntemperierungselement, das in Richtung seiner Dicke durch eine raumzugewandten Außenseite und eine raumabgewandten Außenseite begrenzt ist und eine raumzugewandten Bewehrungslage, eine raumabgewandte Bewehrungslage, eine aus mindestens einer Gitterträgermatte gebildeten Gitterträgerlage, die zwischen der raumzugewandten Bewehrungslage und der raumzugewandten Außenseite des Betonkerntemperierungselements angeordnet ist, wobei die mindestens eine Gitterträgermatte eine Mehrzahl parallel zueinander verlaufender Längsstäbe und einer Mehrzahl parallel zueinander verlaufender und mit Längsstäben verbundener Querstäbe umfasst, eine mit Temperierungsfluid durchströmbare Verrohrung, die mit der Gitterträgerlage verbunden ist, eine Mehrzahl von Abstandhaltevorrichtungen für die raumzugewandte Bewehrungslage, wobei jede Abstandhaltevorrichtung einen Verteilerstab und mindestens zwei Abstandhalterelemente mit mindestens einem Verbindungselement umfasst, wobei die Abstandhalterelemente jeweils über Verbindungselemente an dem Verteilerstab befestigt sind und eine zum Verteilerstab gerichtete Oberseite aufweisen, und eine die raumzugewandten Bewehrungslage, die raumabgewandte Bewehrungslage, die Gitterträgerlage, die Verrohrung und die Mehrzahl von Abstandhaltevorrichtungen zumindest teilweise umgebende Betonschicht umfasst. Darüber hinaus betrifft die vorliegende Erfindung ein Betonkerntemperierungssystem, das mindestens ein derartiges Betonkerntemperierungselement umfasst.

Betonkerntemperierungssysteme sind häufig modular, als aus sog. Betonkerntemperierungselementen bzw. Betonkerntemperierungsmodulen (= BKT-Modulen) aufgebaut oder eine Elementdecke mit integriertem BKT-Modul wird beispielsweise zum Aufbau einer im Bereich von Einfamilien-, Büro- oder Verwaltungsgebäuden zum Einsatz kommenden Betondecke verwendet. Derartige Betonkerntemperierungselemente für eine sog. oberflächennahe Betonkerntemperierung sind im Stand der Technik durch offenkundige Vorbenutzung bekannt. In diesem Zusammenhang bedeutet der Begriff "oberflächennah", dass die Verrohrung, durch die das Temperierungsfluid, insbesondere Wasser, geführt wird, mit geringem Abstand zur raumzugewandten Außenseite des Betonkerntemperierungselements angeordnet ist. Die oberflächennahe Betonkerntemperierung bietet gegenüber der herkömmlichen Betonkerntemperierung, bei der die Verrohrung etwa in der Mitte zwischen den beiden Außenseiten des Betonkerntemperierungselements angeordnet ist, den Vorteil, weniger träge zu sein, also schneller auf veränderte thermische Lasten reagieren zu können. Ein Beispiel einer derartigen oberflächennahen Betonkerntemperierung gemäss dem Oberbegriff des Anspruchs 1 ist in der DE 20 2004 015 984 U1 beschrieben.

Bei Betonkerntemperierungselementen für die oberflächennahe Betonkerntemperierung werden als Gitterträgerlage mehrere, in ihrem Randbereich miteinander verschweißte Gitterträgermatten aus Stahl verwendet, an denen die Verrohrung, vorzugsweise ein Kunststoffrohr oder ein Metall-Kunststoff-Verbundrohr (MKV-Rohr), entweder unmittelbar oder mittels die Verrohrung haltender Klemmschienen befestigt sind.

Die Verrohrung besteht aus in regelmäßigen Abständen (maximal etwa 45 cm) verlegten Rohrleitungen, wobei die Befestigung an der Trägermatte ein Durchhängen der Verrohrung einschränkt. Dieses Einschränken des Durchhangs ist aber notwendig, um im Falle eines Brandes aufgrund einer zu geringen Überdeckung der Verrohrung mit Beton Abplattungen an derartigen Stellen zu vermeiden und im Heiz-/Kühlfall eine gleichmäßige Temperatur an der dem zu temperierenden Raum zugewandten Außenfläche des Betonkerntemperierungselements zu gewährleisten.

Um einen weitgehend gleichmäßigen Abstand der unteren Bewehrungslage zur raumzugewandten Außenseite des Betonkerntemperierungselements zu gewährleisten, werden häufig Abstandhaltevorrichtungen eingesetzt. Beispiele für solche Abstandhaltevorrichtungen sind aus beispielsweise aus den Dokumenten DE 20 2007 000 590 U1, WO 93/19263 A1, GB 2 139 664 A und US 1 153 279 A bekannt. Die raumzugewandte Bewehrungslage liegt dann direkt auf diesen Abstandhaltevorrichtungen auf. Der dadurch erzielte weitgehend konstante Abstand zwischen der raumzugewandten Bewehrungslage und der raumzugewandten Außenseite des Betonkerntemperierungselements schützt die Zugkräfte aufnehmende Bewehrung vor Korrosion. Derartige Abstandhaltevorrichtungen sind im Stand der Technik durch offenkundige Vorbenutzungen bekannt. Die Abstandhaltevorrichtungen können einzelne, die raumzugewandte Bewehrungslage punktuell unterstützende Abstandhalterelemente oder länglich geformte einzelne Abstandhalterelemente sein. Darüber hinaus ist es ebenso bekannt, mehrere Abstandhalterelemente an einem Verteilerstab, vorzugsweise aus Eisen, zu befestigen, um dadurch länglich geformte Abstandhaltevorrichtungen zu erhalten. Die Positionierung der Abstandhalterelemente an dem Verteilerstab ist dabei beliebig.

So gebildete längliche Abstandhaltevorrichtungen werden üblicherweise durch Mattenbinder aus Draht oder Rödeldraht an der Gitterträgerlage befestigt.

Nachteilig an derartigen Abstandhaltevorrichtungen bzw. einzelnen Abstandhalterelementen wird gesehen, dass diese unter rauen Baustellenbedingungen vordem Vergießen mit Beton zu einem Verkippen und/oder Verdrehen neigen, wodurch die zu gewährleistenden Abstände zwischen der raumzugewandten Bewehrungslage und der raumzugewandten Außenseite häufig nicht mehr gewährleistet werden können. Sind die Abstandhalterelemente durch Verklemmung an den Verteilerstäben festgelegt, neigen diese Abstandhalterelemente dazu, sich während des Transports oder während des Verlegens der Betonkerntemperierungselemente an dem Verteilerstab selbst zu drehen. Darüber hinaus besteht die Möglichkeit, dass sich der Verteilerstab selbst zusammen mit den Abstandhaltern relativ zur raumzugewandten Bewehrungslage verdreht. Dadurch können geforderte Betonüberdeckungen der Verrohrung nicht mehr eingehalten werden. Darüber hinaus besteht auch die Gefahr, dass sich die Bewehrung oder andere Einbauteile des Betonkerntemperierungselements an der raumzugewandten Außenseite zu erkennen sind und/oder die geforderte Güte der Betonoberfläche des Betonkerntemperierungselements nicht mehr gewährleistet ist.

Auf dieser Basis liegt die Aufgabe der vorliegenden Erfindung in der Bereitstellung eines Betonkerntemperierungselements, das die Nachteile des Stands der Technik überwindet. Insbesondere soll bei dem erfindungsgemäßen Betonkerntemperierungselement die Betonüberdeckung zwischen der Verrohrung und der raumzugewandten Außenseite des erfindungsgemäßen Betonkerntemperierungselements mit höherer Wahrscheinlichkeit eingehalten werden. Darüber hinaus soll gewährleistet sein, dass sich Einbauteile des Betonkerntemperierungselements an der raumzugewandten Außenseite nicht abzeichnen können und die geforderte Güte der raumzugewandten Außenseite des Betonkerntemperierungselements gewährleistet ist. Darüber hinaus soll das erfindungsgemäße Betonkerntemperierungselement kostengünstig herstellbar sein. Ferner liegt die Aufgabe der vorliegenden Erfindung in der Bereitstellung eines Betonkerntemperierungssystems, das ein derartiges Betonkerntemperierungselement umfasst.

Diese und andere Aufgaben werden durch ein Betonkerntemperierungselement mit den Merkmalen des Anspruches 1 bzw. durch ein Betonkerntemperierungssystem mit den Merkmalen des Anspruchs 8 gelöst. Bevorzugte Ausführungsformen des erfindungsgemäßen Betonkerntemperierungselements sind in den abhängigen Ansprüchen beschrieben.

Gemäß der vorliegenden Erfindung wurde erkannt, dass ein Verdrehen und/oder ein Verkippen der verwendeten Abstandhaltervorrichtungen, die aus einem Verteilerstab und einer Mehrzahl an dem Verteilerstab befestigter Abstandhalterelemente aufgebaut sind, gegenüber der raumzugewandten Bewehrungslage wirksam dadurch verhindert werden kann, dass die Abstandhaltevorrichtungen derart angeordnet sind, dass die Verteilerstäbe jeweils parallel zu den Längsstäben der Gitterlage verlaufen und mindestens ein Abstandhalterelement derart angeordnet ist, dass eine senkrechte Projektion eines Querstabes zumindest abschnittsweise an der Oberseite dieses Abstandhalterelements verläuft. Alternativ dazu können die Abstandhaltevorrichtungen auch derart angeordnet sein, dass die Verteilerstäbe jeweils parallel zu den Querstäben der Gitterlage verlaufen und mindestens ein Abstandhalterelement derart angeordnet ist, dass eine senkrechte Projektion eines Längsstabes zumindest abschnittsweise an der Oberseite dieses Abstandhalterelements verläuft. Eine derartige Anordnung der Abstandhaltevorrichtungen gewährleistet, dass bei einem Verdrehen der Abstandhaltevorrichtung die zum Verteilerstab gerichtete Oberseite des Abstandhalterelements an dem jeweiligen Quer- bzw. Längsstab der Gitterlage anstößt und dadurch ein weiteres Verdrehen verhindert wird. Die Abstandhalterelemente weisen an der Oberseite mindestens zwei Erhöhungen auf, wobei der Verteilerstab jeweils abschnittsweise zwischen zwei Erhöhungen verläuft. Alternativ oder zusätzlich dazu sind die Verbindungselemente auf einer Erhöhung an der Oberseite angeordnet. Derartige Erhöhungen an der Oberseite der Abstandhalterelemente stoßen bei einem Verdrehen unmittelbar gegen einen Stab der Gitterträgermatte, so dass ein Verdrehen der Abstandhaltevorrichtung sehr wirksam verhindert wird. Dabei ist es bevorzugt, dass sich die Erhöhungen jeweils parallel zum Verteilerstab und zumindest annähernd über die gesamte Länge des Abstandhalteelements erstrecken. Besonders bevorzugt ist es dabei, dass die Oberseite der Erhöhungen einen Abstand von weniger als 5 mm, insbesondere weniger als 4 mm und bevorzugt weniger als 3 mm zur Gitterträgerlage aufweist.

Dementsprechend stellt die vorliegende Erfindung ein Betonkerntemperierungselement zur Verfügung, das in Richtung seiner Dicke durch eine raumzugewandte Außenseite und eine raumabgewandte Außenseite begrenzt ist und eine raumzugewandte Bewehrungslage, eine raumabgewandte Bewehrungslage, eine aus mindestens einer Gitterträgermatte gebildete Gitterträgerlage, die zwischen der raumzugewandten Bewehrungslage und der raumzugewandten Außenseite des Betonkerntemperierungselements angeordnet ist, wobei die mindestens eine Gitterträgermatte eine Mehrzahl parallel zueinander verlaufender Längsstäbe und eine Mehrzahl parallel zueinander verlaufender und mit den Längsstäben verbundener Querstäbe umfasst, eine mit Temperierungsfluid durchströmbare Verrohrung, die mit der Gitterträgerlage verbunden ist, eine Mehrzahl von Abstandhaltevorrichtungen für die raumzugewandte Bewehrungslage, wobei jede Abstandhaltevorrichtung einen Verteilerstab und mindestens zwei Abstandhalterelemente mit mindestens einem Verbindungselement umfasst, wobei die Abstandhalterelemente jeweils über Verbindungselemente an dem Verteilerstab befestigt sind und eine zum Verteilerstab gerichtete Oberfläche aufweisen, und eine die raumzugewandte Bewehrungslage, die raumabgewandte Bewehrungslage, die Gitterträgerlage, die Verrohrung und die Mehrzahl von Abstandhaltevorrichtungen zumindest teilweise umgebende Betonschicht umfasst, wobei die Abstandhaltevorrichtungen derart angeordnet sind, dass die Verteilerstäbe jeweils parallel zu den Längsstäben der Gitterlage verlaufen und mindestens ein Abstandhalterelement derart angeordnet ist, dass eine senkrechte Projektion eines Querstabes in Richtung der Oberseite zumindest abschnittsweise an der Oberseite dieses Abstandhalterelements verläuft, oder die Abstandhaltevorrichtungen derart angeordnet sind, dass die Verteilerstäbe jeweils parallel zu den Querstäben der Gitterlage verlaufen und mindestens ein Abstandhalterelement derart angeordnet ist, dass eine senkrechte Projektion eines Längsstabes in Richtung der Oberseite zumindest abschnittsweise an der Oberseite dieses Abstandhalterelements verläuft, und die Abstandhalterelemente an der Oberseite mindestens zwei Erhöhungen aufweisen, wobei der Verteilerstab jeweils abschnittsweise zwischen zwei Erhöhungen verläuft und/oder die Verbindungselemente auf einer Erhöhung an der Oberseite angeordnet sind. Darüber hinaus stellt die vorliegende Erfindung ein Betonkerntemperierungssystem zur Verfügung, das mindestens ein erfindungsgemäßes Betonkerntemperierungselement umfasst.

Dabei kann es von Vorteil sein, wenn die Abstandhalterelemente mindestens zwei voneinander beabstandete Verbindungselemente umfassen. Als Beispiele derartiger Verbindungselemente seien Verdrahtungselemente oder Klemmelemente, insbesondere U-förmige Klemmelemente, die insbesondere die vorzugsweise rund ausgebildeten Verteilerstäbe der Abstandhaltevorrichtungen klemmend umgreifen können, genannt. Eine derartige mehrfache Befestigung der jeweiligen Abstandhalterelemente an den Verteilerstäben der Abstandhaltevorrichtungen verringert ebenfalls die Gefahr des Verdrehens der Abstandhaltevorrichtungen weiter und erhöht den Grad der Befestigung der einzelnen Abstandhalterelemente an den Verbindungsstäben. In diesem Zusammenhang kann es besonders bevorzugt sein, wenn Querstäbe abschnittsweise zwischen zwei benachbarten Verbindungselementen eines Abstandhalterelements verlaufen, wenn die Verteilerstäbe jeweils parallel zu den Längsstäben der Gitterlage verlaufen, oder Längsstäbe abschnittsweise zwischen zwei benachbarten Verbindungselementen eines Abstandhalterelements verlaufen, wenn die Verteilerstäbe jeweils parallel zu den Querstäben der Gitterlage verlaufen. Auf diese Weise leisten auch die Verbindungselemente der einzelnen Abstandhalterelemente einen Beitrag dazu, ein Verdrehen der jeweiligen Abstandhaltevorrichtung zu verhindern.

Es kann auch von Nutzen sein, wenn die Verteilerstäbe der Abstandhaltevorrichtungen derart angeordnet sind, dass eine senkrechte Projektion des Verteilerstabes in Richtung der Gitterträgerlage jeweils über die gesamte Länge des Verteilerstabes auf einen Querstab oder einen Längsstab fällt. Dies bewirkt ein sehr stabiles Verhalten der Abstandhaltevorrichtung gegenüber einem Verdrehen oder Verkippen.

Es kann sich auch als hilfreich erweisen, wenn die Bewehrungslagen als Gitter aus einzelnen Stabstählen oder geschweißten Stabstahlmatten ausgebildet sind, wobei eine Stabstärke der Stabstähle und ein Gitterabstand des Gitters entsprechend den statischen Anforderungen ausgelegt sind. Dabei richtet sich die Auslegung der Bewehrungen nach den statischen Anforderungen. Im Unterschied zu einem vergleichsweise unwirtschaftlichen Betonkerntemperierungselement mit überdimensionierten oder unterdimensionierten Bewehrungslagen enthält ein derartiges Betonkerntemperierungselement genau diejenige Menge an Stabstahl, die es tatsächlich aus statischen Gründen auch benötigt. Die Auswahl der Bewehrungslagen kann entweder manuell oder insbesondere auch vollautomatisch in industriellem Maßstab erfolgen, was sich als besonders kostengünstig erweist.

Ebenso kann es von Nutzen sein, wenn das erfindungsgemäße Betonkerntemperierungselement darüber hinaus weitere Abstandhalter für die raumabgewandte Bewehrungslage umfasst, die zwischen der raumabgewandten Bewehrungslage und der raumzugewandten Bewehrungslage angeordnet sind. Dabei ist es besonders bevorzugt, wenn die weiteren Abstandhalter sowohl mit der raumabgewandten Bewehrungslage als auch mit der raumzugewandten Bewehrungslage verbunden sind.

Es kann sich auch als günstig erweisen, wenn die Verrohrung zwischen der Gitterträgerlage und der raumzugewandten Außenseite des Betonkerntemperierungselement angeordangeordnet ist. Auf diese Weise werden Betonkerntemperierungselemente für eine oberflächennahe Betonkerntemperierung erhalten, wodurch eine geringere Trägheit des erfindungsgemäßen Betonkerntemperierungssystems erzielt werden kann, d.h. das erfindungsgemäße Betonkerntemperierungssystems kann schneller auf veränderte thermische Lasten reagieren.

Es kann auch von Vorteil sein, wenn die einzelnen Gitterträgermatten, die die Gitterträgerlage des erfindungsgemäßen Betonkerntemperierungselements bilden, nicht stoffschlüssig miteinander verbunden sind, beispielsweise nicht miteinander verschweißt sind. Dies kann beispielsweise dadurch erfolgen, dass die Gitterträgermatten der Gitterträgerlage ohne stoffschlüssige Verbindung einander überlappend oder ohne stoffschlüssige Verbindung unter Ausbildung einer Fuge voneinander beabstandet angeordnet sind. Auf diese Weise bildet sich zwischen zwei benachbarten Gitterträgermatten ein Ausgleichsbereich, durch den die unterschiedlichen thermischen Ausdehnungen der jeweiligen Gitterträgermatten und der Verrohrung kompensiert werden kann, so dass hohe Temperaturdifferenzen zwischen der Befestigung der Verrohrung an den Gitterträgermatten und der Fertigstellung des Betonkerntemperierungselements ausgeglichen werden können. Die Gitterträgermatten können ineinander gleiten, ohne dass es zu einer Wellung bzw. Auslenkung der Verrohrung kommt. Dabei kann es sich als besonders hilfreich erweisen, wenn die Gitterträgermatten durch quadratische Gittermaschen gebildet sind und benachbarte Gitterträgermatten über eine Länge überlappen, die annähernd der Hälfte der Kantenlänge eines Gittermaschenquadrats entspricht. Auf diese Weise ist ein Ausgleichsbereich für die unterschiedliche thermische Ausdehnung gewährleistet, der Temperaturschwankungen nach oben und nach unten etwa gleichermaßen kompensieren kann.

Im Folgenden soll die vorliegende Erfindung unter Bezugnahme auf die in den Figuren gezeigten Ausführungsformen der Erfindung im Detail erläutert werden. In den Figuren zeigen:
- Fig. 1: eine perspektiv Ansicht eines Ausschnitts einer Gitterträgerlage mit einer Abstandhaltevorrichtung (nicht erfindungsgemäß);
- Fig. 2: eine Draufsicht auf einen Ausschnitt einer Gitterträgerlage mit einer Abstandhaltevorrichtung (nicht erfindungsgemäß);
- Fig. 3: einen Ausschnitt aus einer Querschnittsansicht der in Fig. 2 gezeigten Gitterträgerlage (nicht erfindungsgemäß);
- Fig. 4: einen Ausschnitt aus einer Querschnittsansicht einer Gitterträgerlage mit einer Abstandhaltevorrichtung gemäß einer Ausführungsform der vorliegenden Erfindung;
- Fig. 5: eine Draufsicht auf einen Ausschnitt einer Gitterträgerlage mit einer Abstandhaltevorrichtung gemäß einer weiteren Ausführungsform der vorliegenden Erfindung; und
- Fig. 6: eine teilweise Querschnittsdarstellung eines Betonkerntemperierungselementes (nicht erfindungsgemäß).

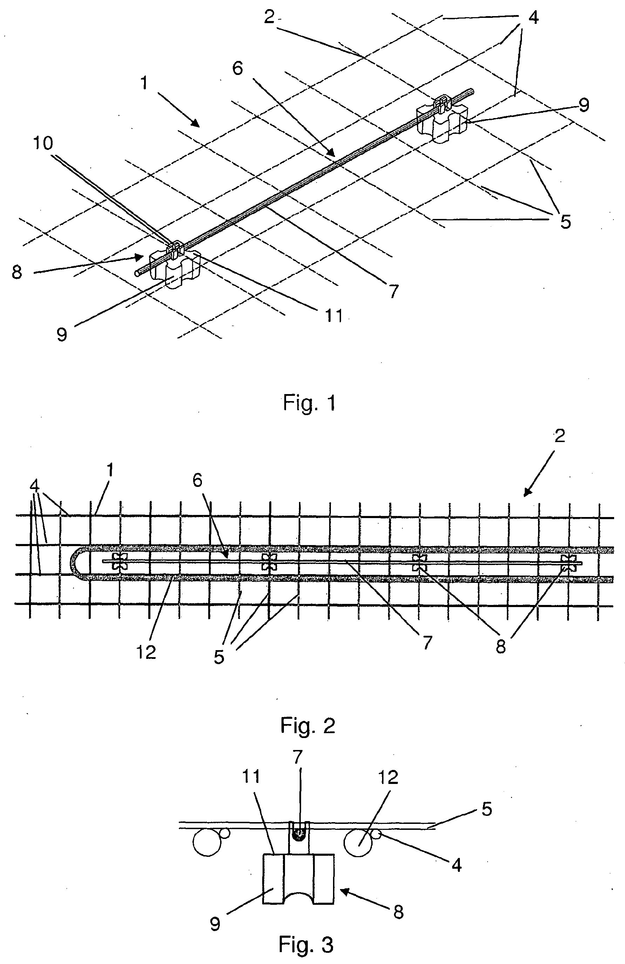

Einander entsprechende Teile bzw. Elemente sind in den Figuren 1 bis 6 mit denselben Bezugszeichen versehen.

In Fig. 1 ist eine perspektivische Ansicht eines Ausschnitts einer in diesem Beispiel aus einer Gitterträgermatten 1 gebildeten Gitterträgerlage 2 eines Betonkerntemperierungselements 3. Die Gitterträgermatte 1 ist dabei aus Gitterstäben aus Stahl aufgebaut, wobei Gitterstäbe in Längsrichtung, die Längsstäbe 4, der zu bildenden Gitterträgermatte 1 in gleichem Abstand parallel zueinander angeordnet sind und dann im rechten Winkel dazu ebenfalls im gleichen Abstand weitere Gitterstäbe, die Querstäbe 5, über diese gelegt und an den Kreuzungspunkten verschweißt sind. Dadurch besitzt die Gitterträgermatte 1 ein quadratisches Maschenmuster. Alternativ sind auch rechtwinklige Maschenmuster oder Maschenmuster in Parallelogramm- oder Rautenform denkbar. In derartigen Fällen können auch andere Winkellagen der zueinander parallelen Längsstäbe 4 zu den zueinander ebenfalls parallelen Querstäben 5 als rechte Winkel auftreten.

Die so gebildete Gitterträgerlage 2 liegt auf einer Abstandhaltevorrichtung 6 auf, die in diesem Beispiel aus einem Verteilerstab 7 und zwei daran befestigten Abstandhalterelementen 8 aufgebaut ist. Alternativ dazu können in einer Abstandhaltevorrichtung 6 auch mehr als zwei Abstandhalterelemente 8, beispielsweise, drei, vier, fünf usw., mit dem Verteilerstab 7 verbunden sein. Jedes Abstandhalterelement 8 umfasst dabei einen Sockel 9, vorzugsweise aus Beton, und zwei parallel zueinander am Sockel 9 festgelegte, als U-förmige Klemmelemente ausgebildete Verbindungselemente 10. Alternativ können die Verbindungselemente 10 eines Abstandhalterelements 8 auch miteinander sein. Der Sockel weist eine zum Verteilerstab 7 weisende Oberseite 11 auf, an der die Verbindungselemente 10 angeordnet sind. Der Verteilerstab 7 verläuft dabei näherungsweise parallel zu den Längsstäben 4 der Gitterträgerlage 2. Die Abstandhalterelemente 8 sind dabei so angeordnet, dass jeweils einer der Querstäbe 5 zwischen den beiden Verbindungselementen 10 des jeweiligen Abstandhalterelements 8 durchgeführt ist. Dadurch wird sowohl ein Verdrehen des einzelnen Abstandhalterelements 8 als auch ein Verdrehen bzw. Verkippen der ganzen Abstandhaltevorrichtung 6 gegenüber der Gitterträgerlage 2 verhindert (Fig. 3). Bei einem derartigen Verdrehen oder Verkippen würde die Oberseite 11 des Abstandhalterelements 8 an den Querstab 5 anstoßen, so dass ein Verdrehen oder Verkippen verhindert bzw. beschränkt ist. In anderen bevorzugten Ausführungsformen sind die Abstandhaltevorrichtungen 6 derart angeordnet sind, dass die Verteilerstäbe 7 ebenfalls jeweils parallel zu den Längsstäben 4 der Gitterträgerlage 2 verlaufen, jedoch nicht zwischen zwei benachbarten Verbindungselementen 10 desselben Abstandhalterelements 8. Mindestens eines der Abstandhalterelemente 8 ist dann dennoch derart angeordnet, dass eine senkrechte Projektion eines Querstabes 5 abschnittsweise an der Oberseite 11 dieses Abstandhalterelements 8 verläuft. Bei einem derartigen Verdrehen oder Verkippen des Abstandhalterelements 8 bzw. der Albstandhaltevorrichtung 7 würde die Oberseite 11 des Abstandhalterelements 8 wiederum an den Querstab 5 anstoßen, so dass ein Verdrehen oder Verkippen verhindert bzw. beschränkt ist. Diese Ausführungen gelten bei einem Vertauschen von Längsstäben 4 und Querstäben 5 in analoger Weise.

Fig. 2 zeigt eine Draufsicht auf einen Ausschnitt einer aus einer Gitterträgermatte 1 gebildete Gitterträgerlage 2 mit einer Abstandhaltevorrichtung. In dieser Ausführungsform umfasst die Abstandhaltevorrichtung 6 einen Verteilerstab 7 und vier daran befestigte Abstandhalterelemente 8, wobei der Abstand zwischen zwei Abstandhalterelementen 8 jeweils fünf Maschenweiten der Gitterträgerlage 2 beträgt. Andere Abstände, die ein Vielfaches der Maschenweite betragen, sind ebenfalls denkbar. Alternativ dazu können zum Aufbau des erfindungsgemäßen Betonkerntemperierungselements 3 auch zwei oder mehr Gitterträgermatten 1 unter Bildung der Gitterträgerlage 2 übereinandergelegt gelegt werden. Jeweils zwei benachbarte Gitterträgermatten 1 können dabei miteinander verschweißt sein. Ebenso können zwei benachbarte Gitterträgermatten 1 auch derart nebeneinander gelegt werden, dass ein Überlappungsbereich zwischen den benachbarten Gitterträgermatten 1 etwa der Hälfte der Kan-Kantenlänge eines Quadrates des Maschenmusters einer der Gitterträgermatten 1 entspricht. Dabei werden die beiden Gitterträgermatten 1 nicht miteinander verschweißt, so dass zwischen den Gitterträgermatten 1 keine stoffschlüssige Verbindung erfolgt.

Eine Verrohrung 12 ist über nicht dargestellte Verbindungsmittel, vorzugsweise über Mattenbinder oder Drahtstücke, mit der Gitterträgerlage 2 verbunden. Dabei ist es bevorzugt, dass die Verrohrung 12, von der in Fig. 2 lediglich zwei über eine 180°- Umlenkung verbundene Rohrleitungsabschnitte gezeigt sind, mindestens abschnittsweise zumindest weitgehend parallel zu den in Längsrichtung verlaufenden Gitterstäben 5 der Gitterträgermatten 1 verläuft. Dabei ist es bevorzugt, wenn die Rohrleitungsabschnitte der Verrohrung 12 jeweils auf der gleichen Seite der in Längsrichtung der Gitterträgermatten 1 verlaufenden Stäben angeordnet ist. Fig. 3 zeigt einen partiellen Querschnitt aus Fig. 2. Daraus geht unmittelbar hervor, dass die Längsstäbe 4 der jeweiligen Gitterträgermatte 1 auf derselben Seite zu der Ebene der Querstäbe 5 angeordnet sind. Auf diese Weise ist gewährleistet, dass die die Temperaturausdehnungsdifferenzen ausgleichende Translationsbewegung der Gitterträgermatten 1 nicht durch ein Verhaken der Gitterträgermatten 1 verhindert wird. Die Befestigung der Rohrleitungsabschnitte der Verrohrung 12 erfolgt dabei vorzugsweise in einem Abstand von maximal etwa 45 cm. In Längsrichtung weisen die Gitterträgermatten 1 eine Länge von maximal etwa 2 m auf. In alternativen Ausführungsformen werden die Gitterträgermatten 1 beabstandet voneinander unter Bildung einer Dehnungsfuge, also ebenfalls ohne stoffschlüssige Verbindung zwischen den einzelnen Gitterträgermatten 1 angeordnet. Die Anordnung der Rohrleitungsabschnitte der Verrohrung 12 sowie die Fixierung der Rohrleitungsabschnitte an den Gitterträgermatten 1 erfolgt wie unter Bezugnahme auf Fig. 2 und Fig. 3 erläutert.

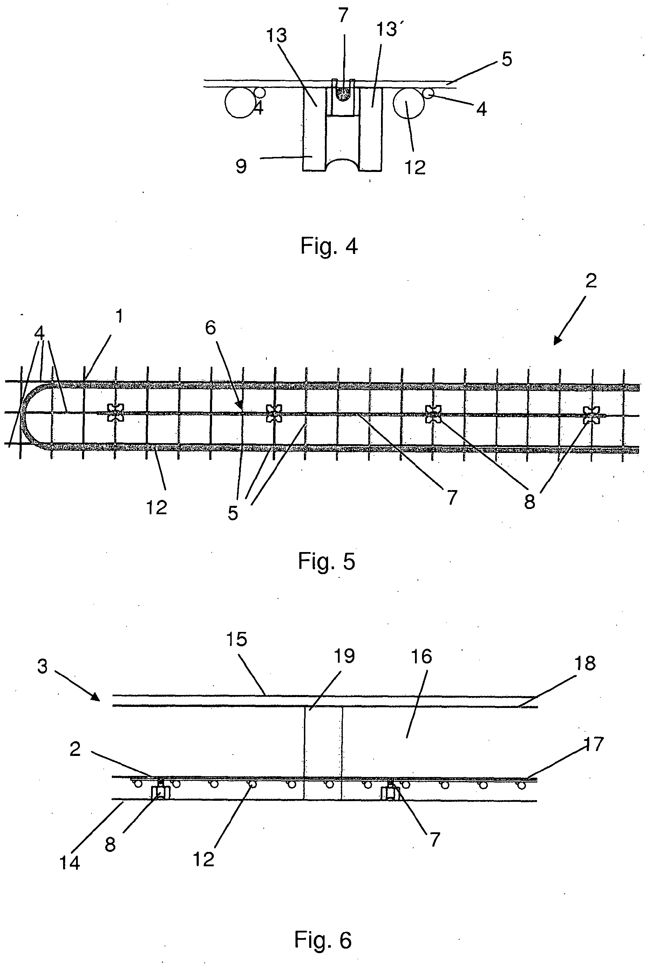

Ein Fig. 3 entsprechender Ausschnitt aus einer Querschnittsansicht einer Gitterträgerlage 1 mit einer Abstandhaltevorrichtung 6 gemäß einer Ausführungsform der vorliegenden Erfindung ist in Fig. 4 dargestellt. Hier sind an der Oberseite 11 des Sockel 9 Erhöhungen 13, 13' in Richtung des Verteilerstabes 7 angeordnet. Der Verteilerstab 7 verläuft zwischen den beiden Erhöhungen 13, 13' hindurch. Die Erhöhungen 13, 13' erstrecken sich zumindest abschnittsweise entlang zweier einander gegenüber liegender Randbereiche des Sockels 9 des Abstandhalterelements 8. Im Falle eines Verdrehens oder Verkippens des Abstandhalterelements 8 bzw. der Albstandhaltevorrichtung 7 als Ganzes würde eine der Erhöhungen 13, 13' wiederum an den Querstab 5 anstoßen, so dass ein Verdrehen oder Verkippen verhindert bzw. begrenzt ist. Diese Ausführungen gelten bei einem Vertauschen von Längsstäben 4 und Querstäben 5 wiederum in analoger Weise.

Fig. 5 zeigt eine Draufsicht auf einen Ausschnitt einer aus einer Gitterträgermatte 1 gebildete Gitterträgerlage 2 mit einer Abstandhaltevorrichtung 6 gemäß einer anderen Ausführungsform der vorliegenden Erfindung. In dieser Ausführungsform umfasst die Abstandhaltevorrichtung 6 wiederum einen Verteilerstab 7 und vier daran befestigte Abstandhalterelemente 8, wobei der Abstand zwischen zwei Abstandhalterelementen 8 wiederum jeweils fünf Maschenweiten der Gitterträgerlage 2 beträgt, wobei andere Abstände, die ein Vielfaches der Maschenweite betragen, ebenfalls denkbar sind. In dieser Ausführungsform ist die Abstandhaltevorrichtung 6 jedoch so angeordnet, dass der Verteilerstab 7 unterhalb eines Längsstabes 4 verläuft. Die unter Bezugnahme auf Fig. 2 genannten Ausführungen zu Gitterträgerlagen 2 aus mehreren Gitterträgermatten 1 sowie zur Verrohrung 12 gelten für diese Ausführungsform der vorliegenden Erfindung entsprechend.

Der Aufbau eines Betonkerntemperierungselements ist in Fig. 6 in einer partiellen Querschnittdarstellung gezeigt. Das Betonkerntemperierungselement 3 weist dabei eine raumzugewandte Außenseite 14 und eine raumabgewandte Außenseite 15 auf. Diese Außenseiten 14, 15 werden durch die Betonschicht 16 gebildet. In der Nähe der raumzugewandten Außenseite 14 ist die raumzugewandte Bewehrungslage 17 angeordnet. Zwischen der raumzugewandten Außenseite 14 und der raumzugewandten Bewehrungslage 4 ist die aus mindestens einer Gitterträgermatte 1, bevorzugt aus einer Mehrzahl von Gitterträgermatten 1 gebildete Gitterträgerlage 2 angeordnet. Exemplarische Ausführungsformen sind unter Bezugnahme auf die Figuren 1 bis 5 beschrieben worden. An der Gitterträgerlage 2 ist die Verrohrung 12 befestigt.

Die Verrohrung 12 kann dabei spiralförmig, mäanderförmig oder doppelmäanderförmig erfolgt sein. Die Verrohrung 12 ist mit einem Vorlauf und einem Rücklauf versehen und vorzugsweise kreuzungsfrei verlegt. Einzelne parallel verlaufende Rohrleitungsabschnitte sind vorzugsweise jeweils über einen an einer Längsseite des erfindungsgemäßen Betonkerntemperierungselements 3 angeordneten Umlenkbereich mit einer 180°-Richtungsumkehr verbunden. Die Verrohrung 12 ist aus einem formstabilen Rohrmaterial aufgebaut. Als Verrohrungsmaterial kommt beispielsweise ein Metall-Kunststoff-Verbund oder ein vernetzter Kunststoff (insbesondere vernetztes Polyethylen, vorzugsweise PEX-a) zum Einsatz.

In der Nähe der raumabgewandten Außenseite 15 des Betonkerntemperierungselements 3 ist die raumabgewandte Bewehrungslage 18 angeordnet. Zwischen den beiden Bewehrungslagen 17, 18 befinden sich weitere Abstandshalter 19, die für einen annähernd konstanten Abstand zwischen den beiden Bewehrungslagen sorgen. Abstandshalter 19, die mit der oberen Bewehrungslage 18 verbunden sind, gewährleisten einen konstanten Abstand zwischen der raumzugewandten Bewehrungslage 17 und der raumabgewandten Außenseite 14.

Zur Herstellung des Betonkerntemperierungselements 3 werden die Gitterträgermatten 1 zunächst angeordnet, wie unter Bezugnahme auf Fig. 1 bis 5 beschrieben. Daraufhin wird die Verrohrung 12 über Befestigungsmittel an der durch die Gitterträgermatten 1 gebildete Gitterträgerlage 2 befestigt. Ebenso werden die Abstandhaltevorrichtungen 6 wie unter Bezug auf Fig.1 bis Fig. 5 erläutert angeordnet und mit der Gitterträgerlage 2 verbunden. Nun kann die auf diese Weise konfektionierte Gitterträgerlage 2 an Ihren Verwendungsort transportiert und die weiteren Stufen des Herstellungsverfahrens können dann vor Ort vorgenommen werden. Alternativ dazu können die weiteren Stufen auch an anderen Orten, beispielsweise im Betonwerk, vorgenommen werden, um eine vorgefertigtes Betonkerntemperierungselement 3 herzustellen. Die Gitterträgerlage 2 wird nun einmal um ihre Längsachse gedreht und auf eine Verschalung gelegt. Darauf wird nun die raumzugewandte Bewehrungslage 17 angeordnet. Darauf wird nun die raumabgewandte Bewehrungslage 18 angeordnet, wobei weitere Abstandshalterelemente 19 für den gewünschten Abstand zwischen den beiden Bewehrungslagen 17, 18 sorgen. Abschließend wird die Verschalung bis zur gewünschten Dicke des erfindungsgemäßen Betonkerntemperierungselements 3 mit Beton ausgegossen und das Resultat einer Aushärtung unterzogen, wodurch die Betonschicht 16 gebildet wird, in die die Bewehrungslagen 17,18 ,die Gitterträgerlage 2, die Verrohrung 12 sowie die Anstandhaltevorrichtungen 6 und die Abstandshalterelemente 19 eingeschlossen sind.

Im Fall eines vorgefertigten Betonkerntemperierungselements 3 kann es dann zu seinem Verwendungsort transportiert und beispielsweise als Decken- oder Wandelement montiert werden. Abschließend wird das gesamte Element 3 nochmals mit Beton vergossen. Alternativ kann das fertiggestellte erfindungsgemäßen Betonkerntemperierungselements 3 auch unmittelbar als Kühl-/Heizpaneel verwendet werden. Hierzu braucht es beispielsweise nur unter eine bestehende Decke gehängt zu werden. Außer einem Anschluss des Verlaufs und des Rücklaufs sind keine weiteren wesentlichen Arbeiten erforderlich, insbesondere kein zweites Vergießen mit Beton.

Voranstehend wurde die Erfindung unter Bezugnahme auf bevorzugte Ausführungsformen im Detail erläutert, wobei diese Beispiele nicht als einschränkend aufgefasst werden sollen.

## Patentansprüche

1. Betonkerntemperierungselement (3), das in Richtung seiner Dicke durch eine raumzugewandten Außenseite (14) und eine raumabgewandten Außenseite (15) begrenzt ist, umfassend:
eine raumzugewandten Bewehrungslage (17);
eine raumabgewandte Bewehrungslage (18);
eine aus mindestens einer Gitterträgermatte (1) gebildete Gitterträgerlage (2), die zwischen der raumzugewandten Bewehrungslage (17) und der raumzugewandten Außenseite (18) des Betonkerntemperierungselements (3) angeordnet ist, wobei die mindestens eine Gitterträgermatte (1) eine Mehrzahl parallel zueinander verlaufender Längsstäbe (4) und eine Mehrzahl parallel zueinander verlaufender und mit Längsstäben (4) verbundener Querstäbe (5) umfasst;
eine mit Temperierungsfluid durchströmbare Verrohrung (12), die mit der Gitterträgerlage (2) verbunden ist;
eine Mehrzahl von Abstandhaltevorrichtungen (6) für die raumzugewandte Bewehrungslage (17), und
eine die raumzugewandten Bewehrungslage (17), die raumabgewandte Bewehrungslage (18), die Gitterträgerlage (2), die Verrohrung (12) und die Mehrzahl von Abstandhaltevorrichtungen (6) zumindest teilweise umgebende Betonschicht (16),
**dadurch gekennzeichnet, dass**
jede Abstandhaltevorrichtung (6) einen Verteilerstab (7) und mindestens zwei Abstandhalterelemente (8) mit mindestens einem Verbindungselement (10) umfasst, wobei die Abstandhalterelemente (8) jeweils über Verbindungselemente (10) an dem Verteilerstab (7) befestigt sind und eine zum Verteilerstab (7) gerichtete Oberseite (11) aufweisen; und
die Abstandhaltevorrichtungen (6) derart angeordnet sind, dass die Verteilerstäbe (7) jeweils parallel zu den Längsstäben (4) der Gitterträgerlage (2) verlaufen und mindestens ein Abstandhalterelement (8) derart angeordnet ist, dass eine senkrechte Projektion eines Querstabes (5) in Richtung der Oberseite (11) zumindest abschnittsweise an der Oberseite (11) dieses Abstandhalterelements (8) verläuft,
oder
die Abstandhaltevorrichtungen (6) derart angeordnet sind, dass die Verteilerstäbe (7) jeweils parallel zu den Querstäben (5) der Gitterträgerlage (2) verlaufen und mindestens ein Abstandhalterelement (8) derart angeordnet ist, dass eine senkrechte Projektion eines Längsstabes (4) in Richtung der Oberseite (11) zumindest abschnittsweise an der Oberseite (11) dieses Abstandhalterelements (8) verläuft; und
die Abstandhalterelemente (8) an der Oberseite (11) mindestens zwei Erhöhungen (13, 13') aufweisen, wobei der Verteilerstab (7) jeweils abschnittsweise zwischen zwei Erhöhungen (13, 13') verläuft und/oder die Verbindungselemente (10) auf einer Erhöhung (13) an der Oberseite (11) angeordnet sind.

2. Betonkerntemperierungselement (3) nach Anspruch 1, **dadurch gekennzeichnet, dass** die Abstandhalterelemente (8) mindestens zwei voneinander beabstandete Verbindungselemente (10) umfassen.

3. Betonkerntemperierungselement (3) nach Anspruch 2, **dadurch gekennzeichnet, dass** Querstäbe (5) abschnittsweise zwischen zwei benachbarten Verbindungselementen (10) eines Abstandhalterelements (8) verlaufen, wenn die Verteilerstäbe (7) jeweils parallel zu den Längsstäben (4) der Gitterlage (2) verlaufen, oder Längsstäbe (4) abschnittsweise zwischen zwei benachbarten Verbindungselementen (10) eines Abstandhalterelements (8) verlaufen, wenn die Verteilerstäbe (7) jeweils parallel zu den Querstäben (5) der Gitterlage (8) verlaufen.

4. Betonkerntemperierungselement (3) nach einem der Ansprüche 1 bis 3, **dadurch gekennzeichnet, dass** die Verteilerstäbe (7) der Abstandhaltevorrichtungen (6) derart angeordnet sind, dass eine senkrechte Projektion des Verteilerstabes (7) in Richtung der Gitterträgerlage (2) jeweils über die gesamte Länge des Verteilerstabes (7) auf einen Querstab (5) oder einen Längsstab (4) fällt.

5. Betonkerntemperierungselement (3) nach einem der Ansprüche 1 bis 4, **dadurch gekennzeichnet, dass** die Bewehrungslagen (17, 18) als Gitter aus einzelnen Stabstählen oder geschweißten Stabstahlmatten ausgebildet sind, wobei eine Stabstärke der Stabstähle und ein Gitterabstand des Gitters entsprechend den statischen Anforderungen ausgelegt sind.

6. Betonkerntemperierungselement (3) nach einem der Ansprüche 1 bis 5, **dadurch gekennzeichnet, dass** es ferner weitere Abstandshalter (19) für die raumabgewandte Bewehrungslage (18) umfasst, die zwischen der raumabgewandten Bewehrungslage (5) und der raumzugewandten Bewehrungslage (4) angeordnet sind.

7. Betonkerntemperierungselement (3) nach einem der Ansprüche 1 bis 6, **dadurch gekennzeichnet, dass** die Verrohrung (12) zwischen der Gitterträgerlage (2) und der raumzugewandten Außenseite (14) des Betonkerntemperierungselement (3) angeordnet ist.

8. Betonkerntemperierungssystem, das mindestens ein Betonkerntemperierungselement (3) nach einem der Ansprüche 1 bis 7 umfasst.

## Claims

1. Concrete core temperature control element (3) which is delimited in the direction of its thickness by an outer side (14) facing a room and an outer side (15) facing away from the room, comprising:
a reinforcing layer (17) facing the room;
a reinforcing layer (18) facing away from the room;
a lattice carrier layer (2) which is formed from at least one lattice carrier mat (1) and which is arranged between the reinforcing layer (17) facing the room and the outer side (18), which faces the room, of the concrete core temperature control element (3), wherein the at least one lattice carrier mat (1) comprises a plurality of longitudinal bars (4) extending parallel to one another and a plurality of transverse bars (5) extending parallel to one another and connected to longitudinal bars (4);
a pipework (12) through which temperature control fluid can flow and which is connected to the lattice carrier layer (2);
a plurality of spacer devices (6) for the reinforcing layer (17) facing the room, and
a concrete layer (16) at least partially surrounding the reinforcing layer (17) facing the room, the reinforcing layer (18) facing away from the room, the lattice carrier layer (2), the pipework (12) and the plurality of spacer devices (6),
**characterized in that**
each spacer device (6) comprises a distributor bar (7) and at least two spacer elements (8) with at least one connecting element (10), wherein the spacer elements (8) are in each case fastened to the distributor bar (7) via connecting elements (10) and have an upper side (11) directed towards the distributor bar (7), and
the spacer devices (6) are arranged in such a way that the distributor bars (7) in each case extend parallel to the longitudinal bars (4) of the lattice carrier layer (2) and at least one spacer element (8) is arranged in such a way that a perpendicular projection of a transverse bar (5) in the direction of the upper side (11) extends at least partially on the upper side (11) of this spacer element (8),
or
the spacer devices (6) are arranged in such a way that the distributor bars (7) in each case extend parallel to the transverse bars (5) of the lattice carrier layer (2) and at least one spacer element (8) is arranged in such a way that a perpendicular projection of a longitudinal bar (4) in the direction of the upper side (11) extends at least partially on the upper side (11) of this spacer element (8); and
the spacer elements (8) have on the upper side (11) at least two elevations (13, 13'), wherein the distributor bar (7) in each case extends partially between two elevations (13, 13') and/or the connecting elements (10) are arranged on an elevation (13) on the upper side (11).

2. Concrete core temperature control element (3) according to Claim 1, **characterized in that** the spacer elements (8) comprise at least two spaced-apart connecting elements (10).

3. Concrete core temperature control element (3) according to Claim 2, **characterized in that** transverse bars (5) extend partially between two adjacent connecting elements (10) of a spacer element (8) if the distributor bars (7) in each case extend parallel to the longitudinal bars (4) of the lattice layer (2), or longitudinal bars (4) extend partially between two adjacent connecting elements (10) of a spacer element (8) if the distributor bars (7) in each case extend parallel to the transverse bars (5) of the lattice layer (8).

4. Concrete core temperature control element (3) according to one of Claims 1 to 3, **characterized in that** the distributor bars (7) of the spacer devices (6) are arranged in such a way that a perpendicular prediction of the distributor bar (7) in the direction of the lattice carrier layer (2) falls in each case over the entire length of the distributor bar (7) onto a transverse bar (5) or a longitudinal bar (4).

5. Concrete core temperature control element (3) according to one of Claims 1 to 4, **characterized in that** the reinforcing layers (17, 18) are formed as lattices of individual bar steels or welded bar steel mats, wherein a bar thickness of the bar steels and a grid spacing of the lattice are configured in accordance with the static requirements.

6. Concrete core temperature control element (3) according to one of Claims 1 to 5, **characterized in that** it further comprises further spacers (19) for the reinforcing layer (18) facing away from the room, which spacers are arranged between the reinforcing layer (5) facing away from the room and the reinforcing layer (4) facing the room.

7. Concrete core temperature control element (3) according to one of Claims 1 to 6, **characterized in that** the pipework (12) is arranged between the lattice carrier layer (2) and the outer side (14), which faces the room, of the concrete temperature control element (5).

8. Concrete core temperature control system which comprises at least one concrete core temperature control element (3) according to one of Claims 1 to 7.

## Revendications

1. Elément de thermorégulation de noyaux de béton (3) qui est limité dans la direction de son épaisseur par un côté extérieur (14) tourné vers l'espace et par un côté extérieur (15) opposé à l'espace, comprenant :
une couche d'armature tournée vers l'espace (17) ;
une couche d'armature opposée à l'espace (18) ;
une couche de support en treillis (2) formée d'au moins un mat de support en treillis (1) qui est disposée entre la couche d'armature tournée vers l'espace (17) et le côté extérieur tourné vers l'espace (18) de l'élément de thermorégulation de noyau de béton (3), l'au moins un mat de support en treillis (1) comprenant une pluralité de barres longitudinales (4) s'étendant parallèlement les unes aux autres et une pluralité de barres transversales (5) s'étendant parallèlement les unes aux autres et connectées à des barres longitudinales (4) ;
un système de tubes (12) pouvant être parcourus par un fluide de thermorégulation, qui est connecté à la couche de support en treillis (2) ;
une pluralité de dispositifs d'espacement (6) pour la couche d'armature tournée vers l'espace (17), et
une couche de béton (16) entourant au moins en partie la couche d'armature tournée vers l'espace (17), la couche d'armature opposée à l'espace (18), la couche de support en treillis (2), le système de tubes (12) et la pluralité de dispositifs d'espacement (6),
**caractérisé en ce que**
chaque dispositif d'espacement (6) comprend une barre de distribution (7) et au moins deux éléments d'espacement (8) avec au moins un élément de liaison (10), les éléments d'espacement (8) étant fixés à chaque fois par le biais d'éléments de liaison (10) à la barre de distribution (7) et présentant un côté supérieur (11) tourné vers la barre de distribution (7) et
les dispositifs d'espacement (6) sont disposés de telle sorte que les barres de distribution (7) s'étendent à chaque fois parallèlement aux barres longitudinales (4) de la couche de support en treillis (2) et au moins un élément d'espacement (8) est disposé de telle sorte qu'une projection perpendiculaire d'une barre transversale (5) dans la direction du côté supérieur (11) s'étende au moins en partie sur le côté supérieur (11) de cet élément d'espacement (8),
ou les dispositifs d'espacement (6) sont disposés de telle sorte que les barres de distribution (7) s'étendent à chaque fois parallèlement aux barres transversales (5) de la couche de support en treillis (2) et au moins un élément d'espacement (8) est disposé de telle sorte qu'une projection perpendiculaire d'une barre longitudinale (4) dans la direction du côté supérieur (11) s'étende au moins en partie sur le côté supérieur (11) de cet élément d'espacement (8) ; et
les éléments d'espacement (8) sur le côté supérieur (11) présentent au moins deux rehaussements (13, 13'), la barre de distribution (7) s'étendant à chaque fois en partie entre deux rehaussements (13, 13') et/ou les éléments de liaison (10) sont disposés sur un rehaussement (13) sur le côté supérieur (11).

2. Élément de thermorégulation de noyaux de béton (3) selon la revendication 1, **caractérisé en ce que** les éléments d'espacement (8) comprennent au moins deux éléments de liaison (10) espacés les uns des autres.

3. Élément de thermorégulation de noyaux de béton (3) selon la revendication 2, **caractérisé en ce que** des barres transversales (5) s'étendent en partie entre deux éléments de liaison (10) adjacents d'un élément d'espacement (8) lorsque les barres de distribution (7) s'étendent à chaque fois parallèlement aux barres longitudinales (4) de la couche en treillis (2), ou des barres longitudinales (4) s'étendent en partie entre deux éléments de liaison (10) adjacents d'un élément d'espacement (8) lorsque les barres de distribution (7) s'étendent à chaque fois parallèlement aux barres transversales (5) de la couche en treillis (8).

4. Élément de thermorégulation de noyaux de béton (3) selon l'une quelconque des revendications 1 à 3, **caractérisé en ce que** les barres de distribution (7) des dispositifs d'espacement (6) sont disposées de telle sorte qu'une projection perpendiculaire de la barre de distribution (7) dans la direction de la couche de support en treillis (2) tombe à chaque fois, sur toute la longueur de la barre de distribution (7), sur une barre transversale (5) ou une barre longitudinale (4).

5. Élément de thermorégulation de noyaux de béton (3) selon l'une quelconque des revendications 1 à 4, **caractérisé en ce que** les couches d'armature (17, 18) sont réalisées sous forme de treillis constitué de barres en acier ou de mats de barres en acier soudés, une épaisseur de barres des barres en acier et une distance de treillis du treillis étant conçues de manière correspondant aux exigences statiques.

6. Élément de thermorégulation de noyaux de béton (3) selon l'une quelconque des revendications 1 à 5, **caractérisé en ce qu'**il comprend en outre d'autres éléments d'espacement (19) pour la couche d'armature opposée à l'espace (18), lesquels sont disposés entre la couche d'armature opposée à l'espace (5) et la couche d'armature tournée vers l'espace (4).

7. Élément de thermorégulation de noyaux de béton (3) selon l'une quelconque des revendications 1 à 6, **caractérisé en ce que** le système de tubes (12) est disposé entre la couche de support en treillis (2) et le côté extérieur tourné vers l'espace (14) de l'élément de thermorégulation de noyaux de béton (3).

8. Système de thermorégulation de noyaux de béton comprenant au moins un élément de thermorégulation de noyaux de béton (3) selon l'une quelconque des revendications 1 à 7.
